# EUROPÄISCHE PATENTANMELDUNG

(11) **EP 1 445 278 A1**
(43) Veröffentlichungstag der Anmeldung: **11.08.2004**
(21) Anmeldenummer: 04001508.3
(22) Anmeldetag: 24.01.2004
(51) Int. Cl.: C08L 1/26, C08B 11/20

(54) **Celluloseether enthaltende Abmischungen mit erhöhtem Schüttgewicht, deren Verwendung in Baustoffsystemen sowie ein Verfahren zur Herstellung von Celluloseether enthaltenden Abmischungen mit erhöhtem Schüttgewicht**

(30) Priorität: 06.02.2003 DE 10304816
(71) Anmelder: Wolff Cellulosics GmbH & Co.KG, 29656 Walsrode (DE)
(72) Erfinder: Schlesiger, Hartwig, Dr., 29683 Fallingbostel (DE); Klohr, Erik-Andreas, Dr., 29664 Walsrode (DE); Dannhorn, Wolfgang, Dr., 29614 Soltau (DE); Juhl, Hans-Jürgen, Dr., 29683 Fallingbostel (DE); Kull, Arne-Henning, Dr., 29699 Bomlitz (DE); Weber, Gunter, Dr., 47802 Krefeld (DE); Wolbers, Peter, Dr., 29664 Walsrode (DE)
(74) Vertreter: Pettrich, Klaus-Günter, Dr.

(57) **Zusammenfassung**

Beschrieben werden Celluloseether enthaltende Abmischungen, enthaltend
a) Celluloseether,
b) 0,1 bis 10 Gew.-% eines Additivs aus der Gruppe Stärke, Stärkeether, Guar, Guarether oder Xanthan, bezogen auf dem trockenen Celluloseether,
c) gegebenenfalls 0,05 bis 1 Gew.-% Polyacrylamid, bezogen auf den trockenen Celluloseether sowie
d) gegebenenfalls weitere Additive,
dadurch gekennzeichnet, dass das Additiv b) als Pulver oder wässrige Lösung und das Polyacrylamid c) als wässrige Lösung zu einem wasserfeuchten Celluloseether mit einem Feuchtigkeitsgehalt im Bereich von 25 bis 75 Gew.-%, bezogen auf das Gewicht des feuchten Celluloseethers, unter Mischen und gegebenenfalls weiterer Zugabe von Wasser zudosiert wurde.

Ebenfalls beschrieben wird ein Verfahren zur Herstellung von Celluloseether enthaltenden Abmischungen mit erhöhtem Schüttgewicht sowie deren Verwendung als Additiv in Baustoffstystemen wie Fliesenkleber oder Zement- und Gipsputzmassen.

## Beschreibung

Beschrieben werden Celluloseether enthaltende Abmischungen mit erhöhtem Schüttgewicht, deren Verwendung in Baustoffsystemen sowie ein Verfahren zur Erhöhung des Schüttgewichts von Celluloseethern.

Celluloseether finden aufgrund ihrer hervorragenden Eigenschaften vielseitig Anwendung, beispielsweise als Verdicker, Kleber, Binde- und Dispergiermittel, Wasserrückhaltemittel, Schutzkolloide, Stabilisatoren, sowie als Suspendier-, Emulgier- und Filmbildemittel.

Es ist allgemein bekannt, dass Celluloseether durch alkalischen Aufschluss von Cellulose und anschließende Veretherung mit Veretherungsreagenzien wie Methylchlorid, Ethylenoxid und Propylenoxid hergestellt werden. Ein in technischen Anwendungen einsetzbares Produkt entsteht jedoch erst nach Wäsche, Verdichtung, Mahlung und Trocknung der nach der Reaktion erhaltenen rohen Cellulosederivate. Insbesondere für die Verdichtung, Mahlung und Trocknung von Cellulosederivaten wird ein hoher apparativer Aufwand getrieben welcher mit hohen Investitionen verbunden ist.

So lassen sich Methylhydroxyethylcellulosen und Methylhydroxypropylcellulosen und Methylcellulosen, sowie Derivate dieser Produkte, teilweise nicht oder nur sehr schwer in für die Anwendung geforderte Schüttgewicht und Feinheiten bringen. Insbesondere dann, wenn es sich um Produkte mit einem hohen Methylierungsgrad und / oder einem geringen Hydroxyalkylierungsgrad handelt.

Hohe Schüttgewichte sind bei Celluloseethem unter anderem gefordert um eine gute Einmischbarkeit in zementäre Systeme oder Gipssysteme zu gewährleisten. Auch bietet ein erhöhtes Schüttgewicht Vorteile bei der Verpackung und beim Versand, da bei gleicher Masse weniger Volumen transportiert werden muss.

Die Alkylsubstitution wird in der Celluloseether-Chemie allgemein durch den DS beschrieben. Der DS ist die mittlere Anzahl an substituierten OH-Gruppen pro Anhydroglucoseeinheit. Die Methylsubstitution wird beispielsweise als DS (Methyl) oder DS (M) angegeben.

Üblicherweise wird die Hydroxyalkylsubstitution durch den MS beschrieben. Der MS ist die mittlere Anzahl von Molen des Veretherungsreagenz, die pro Mol Anhydroglucoseeinheit etherartig gebunden sind. Die Veretherung mit dem Veretherungsreagenz Ethylenoxid wird beispielsweise als MS (Hydroxyethyl) oder MS (HE) angegeben. Die Veretherung mit dem Veretherungsreagenz Propylenoxid wird dementsprechend als MS (Hydroxypropyl) oder MS (HP) angegeben.

Seit langem ist bekannt, dass die Kombination von Celluloseethem mit anderen Additiven oder Zuschlagstoffen die Möglichkeit eröffnet, spezifische Eigenschaften in anwendungstechnischen Formulierungen einzustellen.

Die US 4 654 085 beschreibt ein Mehrkomponentenadditiv, wobei Stärkeether und Polyacrylamide als Komponenten eingesetzt werden. Das Verhältnis wird vorteilhaft wie folgt angegeben: 95-75:20-5:1 Celluloseether zu Stärkeether zu Polyacrylamid.

In der US 4 654 085 werden die Additive pulverförmig in den ebenfalls pulverförmig vorliegenden Celluloseether eingemischt, so dass Schüttgewicht und Feinheit des Celluloseethers nicht beeinflusst werden.

Die DE-A 10 041 311 beschreibt ein Verfahren zur Modifizierung von Celluloseethem, das dadurch gekennzeichnet ist, dass ein feuchter Celluloseether mit einem Additiv oder Additivgemisch in Form einer wässrigen oder organischen Suspension vermischt und anschließend die erhaltene Mischung getrocknet wird.

In der DE-A 10041311 werden die Additive nicht in Pulverform eingearbeitet, auch werden keine Stärkeether eingesetzt.

Die EP-A 1 127 910 und die EP-A 1 127 895 beschreiben Verfahren zur Mahltrocknung von Cellulosederivaten. In beiden Anmeldeschriften wird die Möglichkeit der Additivierung des Mahlgutes mit Stärkeethem vor der Mahltrocknung beschrieben. Jedoch bleibt in sowohl in der EP-A 1 127 910 als auch in der EP-A 1 127 895 offen, welche Einsatzmengen vorteilhaft sind, in welcher Art die Additivierung erfolgen soll und welche Stärkeether vorteilig eingesetzt werden können.

Die Bestimmung der Seitengruppen erfolgt anhand der Zeisel-Methode (Literatur: G. Bartelmus und R. Ketterer, Z. Anal. Chem. 286 (1977) 161-190).

Aufgabe der vorliegenden Erfindung war es daher Celluloseether enthaltende Abmischungen mit erhöhtem Schüttgewicht sowie ein Verfahren zur Verfügung zu stellen, welches es ermöglicht in einfacher Weise das Schüttgewicht von Celluloseethem zu erhöhen, wobei gegebenenfalls auch die Feinheit des Pulvers hin zu feineren Produkte beeinflusst werden sollte.

Diese Aufgabe konnte dadurch gelöst werden, dass man wasserfeuchte Celluloseether, wie sie beispielsweise nach der Wäsche roher Celluloseether vorliegen, mit Stärkeethem mischt und unter Zugabe von Wasser unter Mischen auf eine für die folgenden Prozessschritte ideale Feuchte bringt. Gegebenenfalls kann durch zusätzliche Additivierung von Polyacrylamiden ein synergistischer Effekt erzeugt werden. Die Einsatzmenge an Stärkeether beträgt 0,1 bis 10 Gew.-% bezogen auf den trockenen Celluloseether und die Einsatzmenge des gegebenenfalls eingesetzten Polyacrylamids beträgt 0,05 bis 1,0 Gew.-% bezogen auf den trockenen Celluloseether. Der Stärkeether wird hierbei in Form einer wässrigen Lösung oder bevorzugt in Pulverform zugegeben, während das Polyacrylamid als wässrige Lösung zudosiert wird. Die so additivierten Celluloseether werden anschließend getrocknet und gemahlen, wobei die Mahlung und Trocknung auch in einem Schritt stattfinden kann.

Die Erfindung betrifft daher Celluloseether enthaltende Abmischungen, enthaltend
a) Celluloseether,
b) 0,1 bis 10 Gew.-% eines Additivs aus der Gruppe Stärke, Stärkeether, Guar, Guarether oder Xanthan, bezogen auf dem trockenen Celluloseether,
c) gegebenenfalls 0,05 bis 1 Gew.-% Polyacrylamid, bezogen auf den trockenen Celluloseether sowie
d) gegebenenfalls weitere Additive,
dadurch gekennzeichnet, dass das Additiv b) als wäßrige Lösung oder bevorzugt als Pulver und das Polyacrylamid c) als wässrige Lösung zu einem wasserfeuchten Celluloseether mit einem Feuchtigkeitsgehalt im Bereich von 25 bis 75 Gew.-%, bezogen auf das Gewicht des feuchten Celluloseethers, unter Mischen und gegebenenfalls weiterer Zugabe von Wasser zudosiert wurde.

Überraschenderweise zeigen solche erfindungsgemäßen Abmischungen ein deutlich erhöhtes Schüttgewicht und gegebenenfalls eine deutlich erhöhte Feinheit gegenüber Produkten, die nicht mit Stärkether und gegebenenfalls mit Polyacrylamid additiviert wurden.

In der vorliegenden Erfindung konnte nun überraschenderweise festgestellt werden, dass dann, wenn Stärkeether und gegebenenfalls Polyacrylamide bereits in den feuchten Celluloseether eingearbeitet werden, das Schüttgewicht und gegebenenfalls die Feinheit der Produkte positiv beeinflusst wird. Um vorteilhaften Eigenschaften zu erreichen, können zusätzlich beispielsweise gemäß der US 4 654 085 zu den bereits in den feuchten Celluloseether eingearbeiteten Mengen an Stärkeether und Polyacrylamid weitere Additive in Pulverform in den bereits additivierten Celluloseether zu einem Mehrkomponentenadditiv eingemischt werden, wobei die bereits in den feuchten Celluloseether eingearbeiteten Mengen an Stärkeether und Polyacrylamid bezüglich der Einsatzmenge berücksichtigt werden können.

Gemäß dem erfindungsgemäßen Verfahren werden wasserfeuchte Celluloseether, wie sie beispielsweise nach der Wäsche roher Celluloseether vorliegen, mit Stärkeethem gemischt und gegebenenfalls unter weiterer Zugabe von Wasser unter Mischen auf eine für die folgenden Prozessschritte ideale Feuchte gebracht.

Als Cellulosederivate kommen hierbei bevorzugt Methylcellulosederivate, besonders bevorzugt Methylcellulose oder Methylhydroxyalkylcellulose zum Einsatz. Am meisten bevorzugt werden als Methylhydroxyalkylcellulose, Methylhydroxyethylcellulose oder Methylhydroxypropylcellulose eingesetzt.

Im Falle der Methylhydroxyalkylcellulosen beträgt der DS (Methyl) 0,9 bis 3 und der MS (Hydroxyalkyl) 0,05 bis 4. Bevorzugt beträgt der DS (Methyl) 1,4 bis 2,3 und der MS (Hydroxyalkyl) 0,05 bis 1,0. Am meisten bevorzugt beträgt der DS (Methyl) 1,7 bis 2,0 und der MS (Hydroxyalkyl) 0,1 bis 0,2. Insbesondere werden Methylhydroxyethylcellulosen eingesetzt.

Im Fall der Methylcellulose beträgt der DS (Methyl) bevorzugt 1,4 bis 2,3. Am meisten bevorzugt beträgt der DS (Methyl) 1,7 bis 2,0.

Im Anschluss an die Wäsche und Filtration weisen die wasserfeuchten Filterkuchen eine Feuchte von 25 bis 75 Gew.-%, bezogen auf das Gewicht des feuchten Cellulosethers, auf. Bevorzugt werden solche wasserfeuchten Filterkuchen eingesetzt, die eine Feuchte von 45 bis 65 Gew.-% besitzen. Diese werden mit einer wässrigen Stärkeetherlösung oder bevorzugt dem trockenen Stärkeetherpulver gemischt, wobei gegebenenfalls zuvor, während oder danach weiteres Wasser unter Mischen zur Einstellung der Granulatfeuchte der Abmischung zudosiert werden kann. Bevorzugt wird das weitere Wasser nach dem Einmischen des Stärkeethers zugegeben.

Die Feuchte der so erzeugten Abmischung (Granulatfeuchte) beträgt üblicherweise 45 bis 80 Gew.-% bezogen auf das Gesamtgewicht der Abmischung, bevorzugt 60 bis 75 Gew.-% und besonders bevorzugt 65 bis 75 Gew.-%.

Als Additiv b) wird bevorzugt ein Stärkeether eingesetzt.

Als Stärkeether kommen hierbei Hydroxyalkylstärken zum Einsatz, aber auch der Einsatz von Alkylhydroxyalkylstärken oder Carboxymethylhydroxyalkylstärken ist möglich. Bevorzugt werden Hydroxyalkylstärken wie z.B. Hydroxymethyl-, Hydroxyethyl- oder Hydroxypropylstärke mit einem MS (Hydroxyalkyl) von 0,3 bis 0,9 eingesetzt, besonders bevorzugt Hydroxyalkylstärken mit einem MS (Hydroxyalkyl) von 0,4 bis 0,6. Insbesondere wird Hydroxypropylstärke vor der Hydroxyalkylstärke bevorzugt.

Solche Stärkeether werden durch die Umsetzung von Stärke mit Veretherungsreagenzien in Gegenwart alkalischer Katalysatoren hergestellt. Zur Erhöhung der Viskosität des resultierenden Stärkeethers können hierbei bifunktionelle oder polyfunktionelle vemetzende Reagenzien wie beispielsweise Epichlorhydrin eingesetzt werden.

Bevorzugt werden Stärkeether mit einer Viskosität (5 gew.-%ig in Wasser, 25°C, Brookfield) von mehr als 60 mPas eingesetzt. Am meisten bevorzugt werden hochviskose Stärkeether mit einer Viskosität von mehr als 600 mPas eingesetzt. Insbesondere werden hochviskose Stärkeether eingesetzt, welche unter anderem durch Einsatz vernetzender Reagenzien hergestellt wurden.

Die Einsatzmenge an Stärkeether beträgt 0,1 bis 10 Gew.-% bezogen auf den trockenen Celluloseether. Bevorzugt werden 0,5 bis 8 Gew.-% eingesetzt. Besonders bevorzugt werden 1,0 bis 5 Gew.-% eingesetzt. Am meisten bevorzugt werden 1,5 bis 2,5 Gew.-% Stärkeether eingesetzt. Der Stärkeether wird hierbei bevorzugt in Pulverform unter Mischen zu dem wasserfeuchten Celluloseether zugegeben.

Anstelle eines Stärkeethers können auch Stärke, Guar, Guarderivate wie Hydroxypropylguar oder Xanthan als Additive in die Granulierungsstufe eingesetzt werden.

Gegebenenfalls kann durch zusätzliche Additivierung von Polyacrylamiden ein synergistischer Effekt erzeugt werden. Die Einsatzmenge des gegebenenfalls eingesetzten Polyacrylamids beträgt 0,01 bis 1,0 Gew.-% bezogen auf den trockenen Celluloseether. Bevorzugt wird das Polyacrylamid in einer Einsatzmenge von 0,1 bis 0,6 Gew.-% zudosiert. Das Polyacrylamid wird als wässrige Lösung vor während oder nach der Dosierung des Stärkeethers zudosiert. Bevorzugt wird das Polyacrylamid nach der Dosierung des Stärkeethers zugegeben. Das Polyacrylamid wird als wässrige Lösung in einer Konzentration von 0,5 bis 10 Gew.-% bezogen auf das Gesamtgewicht der wässrigen Lösung, besonders bevorzugt als 2 bis 7 gew.-%ige wässrige Lösung zudosiert.

Als Polyacrylamid können anionische, nicht-ionische oder kationische Polyacrylamide eingesetzt werden. Bevorzugt werden anionische Polyacrylamide mit einem Natriumacrylatgehalt kleiner 20 Gew.-% und einer Viskosität (1 Gew.-%ig in 10 Gew.-%iger Kochsalzlösung, 25°C Brookfield) kleiner 1000 mPas eingesetzt.

Durch Zugabe von Stärkeethern wird das Schüttgewicht der resultierenden Produkte im Vergleich zu nicht-erfindungsgemäßen Celluloseethern um mehr als 20 g/l erhöht. Bevorzugt um mehr als 40 g/l, besonders bevorzugt um mehr als 60 g/l. Insbesondere sogar um mehr als 80 g/l. Eine Erhöhung des Schüttgewichtes wird bereits bei geringen Einsatzmengen von 0,5 Gew.-% Stärkeether bezogen auf den trockenen Celluloseether erreicht, die zusätzliche Erhöhung der Feinheit hingegen wird bei der bevorzugten Einsatzmengen von 1,0 bis 5,0 Gew.-% Stärkeether erreicht. In diesem Fall wird der Siebdurchgang durch ein 0,063 mm Sieb um mehr als 25 %, bevorzugt um mehr als 50 % relativ zum Vergleich ohne Einsatz von Stärkeether erhöht.

Wird sowohl Stärkeether als auch Polyacrylamid additiviert, so wird das Schüttgewicht der resultierenden Produkte im Vergleich zu nicht-erfindungsgemäßen Celluloseethem um 20 g/l erhöht. Bevorzugt um mehr als 40 g/l, besonders bevorzugt um mehr als 60 g/l. Insbesondere sogar um mehr als 80 g/l. Zusätzlich wird die Feinheit der Produkte bei ansonsten konstanten Verfahrensbedingungen deutlich erhöht. Dieses macht sich bemerkbar durch eine Erhöhung des Siebdurchgangs durch ein 0,063 mm Sieb. Der Siebdurchgang durch ein 0,063 mm Sieb wird um mehr als 50 %, bevorzugt um mehr als 100 % relativ zum Vergleich ohne Einsatz von Stärkeether und ohne Einsatz von Polyacrylamid erhöht (Beispiel 9 zu 2 oder Beispiel 10 zu 1). Der Siebdurchgang durch ein 0,063 mm Sieb wird um mehr als 20 %, bevorzugt um mehr als 40 % relativ zum Vergleich ohne Einsatz von Stärkeether und mit Einsatz von Polyacrylamid erhöht (Beispiel 9 zu 5 oder Beispiel 10 zu 3).

Gegebenenfalls können weitere Additive wie beispielsweise Glyoxal und/oder Puffergemische, beispielsweise in Form wässriger Lösungen, zu dem wasserfeuchten Celluloseether gegeben werden. Hierdurch werden dann lösungsverzögerte Produkte erhalten. Die Herstellung lösungsverzögerter Cellulosederivate ist dem Fachmann seit langem bekannt.

Ein weiterer Gegenstand der Erfindung ist ein Verfahren zur Herstellung von Celluloseether enthaltenden Abmischungen mit erhöhtem Schüttgewicht, dadurch gekennzeichnet, dass man
a) zu einem wasserfeuchtem Celluloseether mit einem Feuchtigkeitsgehalt im Bereich von 25 bis 75 Gew.-%, bezogen auf das Gesamtgewicht der Abmischung, 0,1 bis 10 Gew.-% eines Additivs aus der Gruppe Stärke, Stärkeether, Guar, Guarether oder Xanthan, wobei die Gew.-%-Angaben sich auf den trockenen Celluloseether beziehen, in Form einer wässrigen Lösung oder bevorzugt in Form eines Pulvers,
b) gegebenenfalls 0,01 bis 1 Gew.-% Polyacrylamid, wobei die Gew.-%-Angaben sich auf der trockenen Celluloseether beziehen, in Form einer wässrigen Lösung sowie
c) gegebenenfalls weitere Additive
unter Mischen und gegebenenfalls weiterer Zugabe von Wasser zudosiert und anschließend die Abmischung einer Mahlung und Trocknung unterwirft.

Wasser wird soweit zugegeben, dass die Granulatfeuchte der Abmischung 45 bis 80 Gew.-%, bevorzugt 60 bis 75 Gew.-% und besonders bevorzugt 65 bis 75 Gew.-%, jeweils bezogen auf das Gesamtgewicht der Abmischung, beträgt.

Die Celluloseether enthaltenden Abmischungen werden getrocknet und gemahlen, wobei die Mahlung und Trocknung auch in einem Schritt stattfinden kann. Die Trocknung und Mahlung oder Mahltrocknung wird hierbei nach Methoden gemäß dem Stand der Technik durchgeführt. Bevorzugt wird die Mahlung und Trocknung kombiniert in einem Schritt durchgeführt. Gegebenenfalls können sich weitere Mahlungsschritte gemäß dem Stand der Technik anschließen, um eine weitere Zerkleinerung der Produkte zu erreichen.

Alternativ können die Verfahrensbedingungen bei der Mahlung und Trocknung oder Mahltrocknung so variiert werden, dass die Feinheit der Produkte unverändert bleibt, der energetische Aufwand zur Zerkleinerung der Produkte jedoch abgesenkt ist.

Ein weiterer Gegenstand der Erfindung ist die Verwendung der erfindungsgemäßen Abmischungen in Baustoffsystemen.

Die erfindungsgemäßen Abmischungen finden bevorzugt Einsatz als Additive in Fliesenklebern, Putzen wie Zement- oder Gipsputz, Spachtelmassen, in zementären Systemen, die extrudiert werden, und anderen Baustoffen.

Um die Produkte für einen Einsatz in spezifischen Baustoffsystemen anzupassen kann gegebenenfalls eine weitere Additivierung mit pulverförmigen Additiven durchgeführt werden, wie sie beispielsweise in der US-A 4 654 085 beschrieben ist.

### Beispiele

### Mahltrocknungsanlage:

Die in den Beispielen 1 bis 12 eingesetzte Mahltrocknungsanlage und der Mahltrocknungsvorgang lassen sich wie folgt beschreiben:

Die Mahlanlage besteht aus einer sieblosen Hochdrehzahl-Gastrom-Rotationsmühle (450 mm Durchmesser, 5 Mahlbahnen, 3650 U/min ). Der Mühle nachgeschaltet ist ein Zyklonabscheider und ein Schlauchfilter. Reingasseitig ist ein Ventilator angeordnet, der den staubfreien Gasstrom in einen Wärmetauscher leitet, wo das Transportgas auf die geforderte Trocknungstemperatur überhitzt wird.

Mittels einer Dosierschnecke wird das Granulat in die Mühle auf Höhe der ersten und zweiten Mahlbahn dosiert. Durch eine der Dosierschnecke vorgeschaltete Lochplatte wird das Aufgabegut in einzelne Stränge von ca. 10 mm Durchmesser zerteilt.

Überschüssiges Transportgas wird ausgeschleust.

Das eintretende Transportgas hat eine Temperatur von 200 bis 240°C bei Normaldruck. Nach der Mühle beträgt die Temperatur des Transportgases 120 bis 130°C. Die umgewälzte Gasmenge beträgt 1000 bis 1200 Betriebskubikmeter pro Stunde (hinter der Mühle).

Der Granulatdurchsatz wurde so eingestellt, dass ein Durchsatz von ca. 18 kg/h trockenem Produkt erreicht wurde.

Meßmethode: Soweit nicht anders angegeben, wurden die angegebenen Viskositäten der Methylhydroxyethylcellulosen und Methylhydroxypropylcellulosen an 2 Gew.%igen Lösungen der trockenen Celluloseether in Wasser bei 20°C und einem Schergefälle von 2,55 s⁻¹ gemessen (Meßgerät: Haake Rotovisko VT 550)

### Beispiele 1 bis 4:

In einem 300 1 Pflugscharmischer der Firma Lödige werden jeweils 29 kg einer feuchten Methylhydroxyethylcellulose (Trockengehalt 45 Gew.-%, 22.000 mPas, DS (M) 1,8 und MS (HE) 0,1) bei 50-30°C intensiv mit Stärkeetherpulver (Hydroxypropylstärke, MS (HP) 0,5, Brookfield Viskosität 5 Gew.-%ig in Wasser: 1200 mPas bei 25°C, Spindel 4 bei 100 UPM, Einsatzmenge bezogen auf trockene MHEC: siehe Tabelle 1) gemischt und mit Wasser besprüht, so dass sich die in Tabelle 1 aufgeführte Feuchte (bezogen auf Gesamtmasse) im resultierenden Granulat einstellt (Granulatfeuchte). Das Granulat wird anschließend in der oben beschriebenen Mahltrocknungsapparatur zerkleinert und gleichzeitig getrocknet.

**Tabelle 1**

| **Beispiel** | **HPS Gew.-%** | **Granulateuchte, Gew.-%** | **Schüttgewicht, g/l** | **Siebdurchgan g< 0,063 mm, Gew.-%** | **Veränderung Siebdurchgang 0,063mm,** | **Vergleich/ Erfindung** |
|---|---|---|---|---|---|---|
| 1 | 0 | 71,5 | 170 | 32 | - | V |
| 2 | 0 | 74,5 | 165 | 29 | - | V |
| 3 | 2 | 72 | 256 | 52 | + 62,5 % relativ zu Beisp. 1 | E |
| 4 | 2 | 73,5 | 262 | 57 | + 96,5 % relativ zu Beisp. 2 | E |

Bei ansonsten vergleichbaren Bedingungen liefert das erfindungsgemäße Verfahren (Beispiele 3 und 4) Produkte mit deutlich höheren Schüttgewicht und deutlich höherem Feinanteil in der Sieblinie im Vergleich zu den Beispielen V1 und V2 (ohne Additivierung von Hydroxypropylstärke)

### Beispiele 5 bis 7:

In einem 300 l Pflugscharmischer der Firma Lödige werden 29 kg einer feuchten Methylhydroxyethylcellulose (Trockengehalt 45 Gew.-%, 22.000 mPas, DS (M) 1,8 und MS (HE) 0,1) bei 50-30°C intensiv mit Stärkeetherpulver (Hydroxypropylstärke, MS (HP) 0,5, Brookfield Viskosität 5Gew.-%ig in Wasser: 1200 mPas bei 25°C, Spindel 4 bei 100 UPM, Einsatzmenge bezogen auf trockene MHEC: siehe Tabelle 2) gemischt und mit Wasser besprüht, so dass sich die in Tabelle 2 aufgeführte Feuchte (bezogen auf Gesamtmasse) im resultierenden Granulat einstellt (Granulatfeuchte). Das Granulat wird zerkleinert und gleichzeitig getrocknet (siehe oben).

**Tabelle 2**

| **Beispiel** | **HPS Gew.-%** | **Granulat feuchte Gew.-%** | **Schüttgewicht g/l** | **Siebdurchgang < 0,063 mm Gew.-%** | **Vergleich/ Erfindung** |
|---|---|---|---|---|---|
| 5. | 0,5 | 75 | 191 | 29 | E |
| 6. | 5 | 73,5 | 296 | 74 | E |
| 7. | 10 | 72,5 | 278 | 36 | E |

Das erfindungsgemäße Verfahren liefert Produkte mit deutlich höherem Schüttgewicht relativ zu den Vergleichsversuchen 1 und 2 (ohne Additivierung von Hydroxypropylstärke) zusätzlich ist in Beispiel 6 die Feinheit deutlich gegenüber dem Vergleichsversuch 2 (ohne Additivierung von Hydroxypropylstärke) erhöht (+ 155 %).

### Beispiele 8 bis 10:

In einem 300 1 Pflugscharmischer der Firma Lödige werden 33 kg einer feuchten Methylhydroxyethylcellulose (Trockengehalt 43 Gew.-%, 32.000 mPas, DS (M) 1,8 und MS (HE) 0,1) bei 50-30°C intensiv mit Stärkeetherpulver (Hydroxypropylstärke, MS (HP) 0,5, Brookfield Viskosität 5Gew.-%ig in Wasser: 1200 mPas bei 25°C, Spindel 4 bei 100 UPM, Einsatzmenge bezogen auf trockene MHEC: siehe Tabelle 3) gemischt und mit Wasser besprüht, zusätzlich wird unter Mischen eine 5 gew.-%ige wässrige Lösung eines Polyacrylamids (Brookfield Viskosität 1 gew.-%ig in 10 gew.-%iger Kochsalzlösung: 500 mPas bei 25°C, Spindel 1 bei 10 UPM, ca. 10 Gew.-% Natriumacrylat im PAAm, Einsatzmenge (Aktivgehalt bezogen auf trockene MHEC): siehe Tabelle 3) zudosiert, so dass sich die in Tabelle 3 aufgeführte Feuchte (bezogen auf Gesamtmasse) im resultierenden Granulat einstellt (Granulatfeuchte). Das Granulat wird zerkleinert und gleichzeitig getrocknet (siehe oben).

**Tabelle 3**

| **Bei- spiel** | **HPS Gew.-%** | **PAAm Gew.-%** | **Granulat feuchte Gew.-%** | **Schüttgewicht g/l** | **Siebdurchgan g < 0,063 mm Gew.-%** | **Veränderung Siebdurchgang 0,063mm,** | **Vergleich/Erfindung** |
|---|---|---|---|---|---|---|---|
| 8. | 0 | 0,3 | 73 | 174 | 51 | - | V |
| 9. | 0,5 | 0,3 | 74 | 253 | 65 | + 124 % relativ zu Beisp.2 | E |
| 10. | 2,0 | 0,3 | 72 | 275 | 71 | + 122 % relativ zu Beisp. 1 | E |

Die Beispiele 9 und 10 (erfindungsgemäßes Verfahren) liefern bei ansonsten vergleichbaren Bedingungen Produkte mit deutlich höherem Schüttgewicht und deutlich höherem Feinanteil in der Sieblinie. Das Vergleichsbeispiel V8 liefert durch die Additivierung mit Polyacrylamid zwar ein Produkt mit höherer Feinheit im Vergleich zum Beispiel 1 (ohne Einsatz von Polyacrylamid), jedoch ist das Schüttgewicht nicht maßgeblich erhöht. Die Beispiele mit Additivierung von Hydroxypropylstärke und Polyacrylamid (Beispiele 9 und 10) zeigen hingegen bei vergleichbarer Granulatfeuchte eine weitere Erhöhung des Schüttgewichts und der Feinheit im Vergleich zu den Beispielen in denen nur Hydroxypropylstärke additiviert wurde (Beispiele 5 und 3).

### Beispiele 11 bis 12:

Es wird wie in den Beispielen 8 bis 10 verfahren, jedoch wird dieses Mal der Stärkeether als 5 gew.-%ige wässrige Lösung zur feuchten Methylhydroxyethylcellulose gegeben und intensiv gemischt. Es wird Wasser und eine 5 gew.-%ige Lösung des Polyacrylamids unter Mischen zudosiert, so dass sich die in Tabelle 4 angegebene Granulatfeuchte einstellt. Das Granulat wird zerkleinert und gleichzeitig getrocknet.

**Tabelle 4**

| **Bsp.** | **HPS Gew.-%** | **PAAm Gew.-%** | **Granulatfeuchte** | **Schütt gewicht** | **Siebdurch- gang <0,063 mm Gew.-%** | **Vergleich/ Erfindung** |
|---|---|---|---|---|---|---|
| 11. | 1 | 0,3 | 72 | 254 | 64 | E |
| 12. | 2 | 0,3 | 73 | 303 | 73 | E |

### Beispiele 13 bis 14:

In einem 300 1 Pflugscharmischer der Firma Lödige werden 37 kg einer feuchten Methylhydroxypropylcellulose (Trockengehalt 40 Gew.-%, 13.000 mPas, DS (M) 1,9 und MS (HP) 1,0) bei 50-30°C intensiv mit Stärkeetherpulver (Hydroxypropylstärke, MS (HP) 0,5 , Brookfield Viskosität 5 gew.-%ig in Wasser: 1200 mPas bei 25°C, Spindel 4 bei 100 UPM, Einsatzmenge bezogen auf trockene MHPC: siehe Tabelle 4) gemischt und mit Wasser besprüht, so dass sich die in Tabelle 4 aufgeführte Feuchte (bezogen auf Gesamtmasse) im resultierenden Granulat einstellt (Granulatfeuchte). Das Granulat wird anschließend in der oben beschriebenen Mahltrocknungsapparatur zerkleinert und gleichzeitig getrocknet, dieses Mal wird jedoch bei einer Rotordrehzahl von 2000 U/min gearbeitet und zusätzlich wird zwischen Schlauchfilter und Wärmetauscher ein Wäscher so in den Gasstrom geschaltet, dass der Wasserdampf im Transportgas niedergeschlagen wird. Gleichzeitig wird 20 m³/h Stickstoff in den Kreislauf dosiert. Als Transportgas dient in diesem Fall also Stickstoff, welcher im Wärmetauscher auf 155-175°C aufgeheizt wird. Die umgewälzte Gasmenge und die Temperatur nach der Mühle entspricht den oben angegebenen Werten. Der Durchsatz an getrockneter MHPC betrug ca. 15 kg/h.

**Tabelle 5**

| **Beispiel** | **HPS Gew.-%** | **Granulat- feuchte Gew.-%** | **Schütt- gewicht g/l** | **Siebdurchgang < 0,063 mm Gew.-%** | **Vergleich/ Erfindung** |
|---|---|---|---|---|---|
| 13. | 0 | 65,4 | 257 | 12 | V |
| 14. | 2,0 | 65,3 | 353 | 33 | E |

Bei ansonsten vergleichbaren Bedingungen liefert das erfindungsgemäße Verfahren (Beispiele 14) auch bei Einsatz von MHPC und Trocknung im Stickstoffstrom ein Produkt mit deutlich höherem Schüttgewicht und deutlich höherem Feinanteil in der Sieblinie im Vergleich zum Vergleichsbeispiel V13 (ohne Additivierung von Hydroxypropylstärke).

### Beispiele 15 bis 18:

Eine pulverförmige Methylhydroxyethylcellulose (Feuchte: 2,3 Gew.-%, 22.000 mPas, DS (M) 1,8 und MS (HE) 0,1) wurde intensiv mit Stärkeetherpulver trocken gemischt. Es kam der gleiche Stärkeether wie in den Beispielen 3 und 4 zum Einsatz. Tabelle 6 zeigt das Schüttgewicht in Abhängigkeit der Einsatzmenge.

**Tabelle 6**

| **Beispiel** | **HPS Gew.-%** | **Schüttgewicht g/l** | **Vergleich/ Erfindung** |
|---|---|---|---|
| 15. | 0 | 200 | V |
| 16. | 2,0 | 208 | V |
| 17. | 5,0 | 215 | V |
| 18. | 10,0 | 223 | V |

Die trockene Abmischung von pulverförmiger Methylhydroxyethylcellulose mit Stärkeetherpulver führt nur zu einer geringfügigen Erhöhung des Schüttgewichts. So führt die Additivierung von 2 Gew.-% Stärkeether hier nur zu einer Schüttgewichtserhöhung von 8 g/l. Im erfindungsgemäßen Verfahren gemäß den Beispielen 3 oder 4 hingegen führt eine Additivierung mit 2 Gew.-% Stärkeether zu einer Schüttgewichtserhöhung von mehr als 80 g/l.

## Patentansprüche

1. Celluloseether enthaltende Abmischungen, enthaltend
a) Celluloseether,
b) 0,1 bis 10 Gew.-% eines Additivs aus der Gruppe Stärke, Stärkeether, Guar, Guarether oder Xanthan, bezogen auf dem trockenen Celluloseether,
c) gegebenenfalls 0,05 bis 1 Gew.-% Polyacrylamid, bezogen auf den trockenen Celluloseether sowie
d) gegebenenfalls weitere Additive,
**dadurch gekennzeichnet, dass** das Additiv b) als Pulver oder wässrige Lösung und das Polyacrylamid c) als wässrige Lösung zu einem wasserfeuchten Celluloseether mit einem Feuchtigkeitsgehalt im Bereich von 25 bis 75 Gew.-%, bezogen auf das Gewicht des feuchten Celluloseethers, unter Mischen und gegebenenfalls weiterer Zugabe von Wasser zudosiert wurde.

2. Celluloseether enthaltende Abmischungen nach Anspruch 1, **dadurch gekennzeichnet, dass** der Celluloseether Methylcellulose oder Methylhydroxyalkylcellulose ist.

3. Celluloseether enthaltende Abmischungen nach einem der Ansprüche 1 bis 2, **dadurch gekennzeichnet, dass** das Additiv b) als Pulver zudosiert wurde.

4. Celluloseether enthaltende Abmischungen nach einem der Ansprüche 1 bis 3, **dadurch gekennzeichnet, dass** das Polyacrylamid c) ein anionisches Polyacrylamid mit einem Natriumacrylatgehalt kleiner 20 Gew.-% und einer Viskosität kleiner 1000 mPas ist.

5. Celluloseether enthaltende Abmischungen nach einem der Ansprüche 1 bis 4, **dadurch gekennzeichnet, dass** als Additiv b) ein Stärkeether aus der Gruppe Hydroxyalkylstärke, Alkylhydroxyalkylstärke oder Carboxymethylhydroxyalkylstärke eingesetzt wird.

6. Verfahren zur Herstellung von Celluloseether, enthaltender Abmischungen mit erhöhtem Schüttgewicht, **dadurch gekennzeichnet, dass** man
a) zu einem wasserfeuchtem Celluloseether mit einem Feuchtigkeitsgehalt im Bereich von 25 bis 75 Gew.-%, bezogen auf das Gesamtgewicht der Abmischung, 0,1 bis 10 Gew.-% eines Additivs aus der Gruppe Stärke, Stärkeether, Guar, Guarether oder Xanthan, wobei die Gew.-%-Angaben sich auf den trockenen Celluseether beziehen, in Form eines Pulvers oder einer wässrigen Lösung,
b) gegebenenfalls 0,01 bis1 Gew.-% Polyacrylamid, wobei die Gew.-%-Angaben sich auf der trockenen Celluloseether beziehen, in Form einer wässrigen Lösung sowie
c) gegebenenfalls weitere Additive
unter Mischen und gegebenenfalls weiterer Zugabe von Wasser zudosiert und anschließend die Abmischung einer Mahlung und Trocknung unterwirft.

7. Verfahren nach Anspruch 6, **dadurch gekennzeichnet, dass** die Mahlung und Trocknung in einem Schritt als Mahltrocknung durchgeführt wird.

8. Verfahren nach einem der Ansprüche 6 bis 7, **dadurch gekennzeichnet, dass** die weitere Zugabe von Wasser bis zu einer Granulatfeuchte der Abmischung von 45 bis 80 Gew.-%, bezogen auf das Gesamtgewicht der Abmischung, erfolgt.

9. Verwendung von Celluloseether enthaltenden Abmischungen gemäß einem der Ansprüche 1 bis 5 als Additiv in Baustoffsystemen.

10. Verwendung nach Anspruch 9, **dadurch gekennzeichnet, dass** die Baustoffsysteme Fliesenkleber, Zement- oder Gipsputzmassen, Spachtelmassen oder zementäre zur Extrusion geeignete Baustoffmischungen sind.
